# EUROPÄISCHE PATENTSCHRIFT

(11) **EP 0 819 313 B1**
(45) Veröffentlichungstag und Bekanntmachung des Hinweises auf die Patenterteilung: **09.06.1999**
(21) Anmeldenummer: 96908910.1
(22) Anmeldetag: 03.04.1996
(51) Int. Cl.: H01B 13/06, H02K 3/30, H01B 3/30

(54) **VERFAHREN ZUM BESCHICHTEN VON WICKLUNGSTEILEN**
METHOD OF COATING PARTS OF WINDINGS
PROCEDE DE REVETEMENT DE PARTIES D'ENROULEMENTS

(30) Priorität: 05.04.1995 AT 60795
(43) Veröffentlichungstag der Anmeldung: 21.01.1998
(73) Patentinhaber: ASTA Elektrodraht GmbH, A-2755 Oed/Bez. Wiener Neustadt (AT)
(72) Erfinder: PERGER, Paul, A-2761 Miesenbach 158 (AT); SCHAMBÖCK, Karl, A-2761 Waldmannsfeld (AT)
(74) Vertreter: Rieberer, Stefan, Dipl.-Ing.
(86) Internationale Anmeldenummer: AT9600066
(87) Internationale Veröffentlichungsnummer: WO9631886

(56) Entgegenhaltungen:
- US-A- 4 147 817
- US-A- 4 792 462

## Beschreibung

Die Erfindung betrifft ein Verfahren zum Beschichten von Wicklungsteilen, insbesondere der Einzelleiter eines Röbelstabes vorzugsweise für rotierende, elektrische Maschinen.

Bei den bisher bekannten Verfahren zum Herstellen eines Wicklungsteiles, insbesondere eines Röbelstabes wurde der blanke Einzelleiter mit Glasseide umsponnen und mit Lack getränkt und dann ausgehärtet. Ferner ist auch ein Verfahren bekannt, bei dem auf den Einzelleiter ein Polyestermischgarn aufgesintert wird.

Nachteilig bei dieser Herstellungsart ist jedoch, daß die Glasseidenisolation aber auch das Polyestermischgarn aufgrund der physikalischen Eigenschaften bei einer extremen Hochkantbiegung, wie es bei der Kröpfung von Röbelstäben erfolgt, brechen bzw. aufreißen. Nachdem derartige Röbelstäbe noch einem Preßvorgang unterliegen, kann es im Betrieb an diesen Stellen zu Teilleiterschlüssen kommen. Daher mußte an derartig gefährdeten Stellen eine zusätzliche Kröpfstellenisolation vorgesehen werden. Einerseits ist das Einbringen einer Kröpfstellenisolation sehr zeitintensiv, was sich in den Herstellkosten niederschlägt, anderseits vergrößern sich die Stababmessungen, wodurch der Füllfaktor verringert wird.

Darüberhinaus ist auch eine spezielle Lackglasseidenisolation bekannt, bei der der blanke Draht vorerst mit einem Isolierlack versehen und mit Umspannen dann die Glasseide mit einer Lackimprägnierung versehen wird. Das Aufreißen der Glasseide in Hinblick auf Teilleiterschlüsse ist zwar nicht mehr so problematisch, jedoch ist die Fertigung sehr aufwendig. Ein Verfahren dieser Art ist beispielsweise in dem Prospekt "Roebelstäbe/Roebel bars" Nr. 200/III 89/AW der Anmelderin beschrieben.

Die Glasseide mußte deshalb verwendet werden, da eine gute Verbindung von Teilleiterisolation zu Hauptisolation sichergestellt werden mußte. Bei einer Bildung von Hohlräumen zwischen der Teilleiterisolierung und der Hauptisolierung können Glimmerscheinungen auftreten, die zur Zerstörung der Wicklung führen können.

Darüberhinaus verschlechtert sich auch der Verlustwinkel des Wicklungsstabes. Wie ja bekannt, soll der Anstieg des Verlustwinkels nicht über 2,5 %o liegen.

Weiters ist in der US 4,147,817 ein Verfahren zur Isolierung von elektrischen Einzelleitern beschrieben, bei welchem der Leiter ein oder zwei mal durch eine Harzschmelze gezogen wird, wonach die entstandene Schicht gehärtet wird. Das Problem einer möglichen Beschädigung der Isolation bei Kröpfung von Röbelstäben wird dabei jedoch nicht berücksichtigt.

Aufgabe der Erfindung ist es ein Verfahren zum Beschichten von Wicklungsteilen, insbesondere der Einzelleiter eines Röbelstabes zu schaffen, das einerseits die obigen Nachteile vermeidet und das anderseits weniger Fertigungsschritte bei besserer Qualität aufweist.

Das erfindungsgemäße Verfahren ist dadurch gekennzeichnet, daß nach der thermischen Vorbehandlung des Leitermaterials ein Primerlack aufgebracht und angehärtet, vorzugsweise ausgehärtet wird, gegebenenfalls anschließend eine oder mehrere Schichten Isolierlack auf Basis Esterimid bzw. Amid-Imid oder vorzugsweise einem Gemisch aus beiden aufgebracht und die einzelnen Schichten angehärtet, vorzugsweise ausgehärtet werden, und daß danach ein für die Weiterverarbeitung des Isolationsaufbaues geeigneter Haftvermittler auf Basis Polyvinylester, vorzugsweise ein Polyvinylbutyral aufgebracht und durchgehärtet wird.

Mit der Erfindung ist es erstmals möglich, einen Wicklungsteil bzw. einen aus mehreren Einzelleitern hergestellten Röbelstab den Maschinenherstellern anzubieten, der für die Weiterverarbeitung optimale Eigenschaften aufweist.

Im Gegensatz zu den nach den Verfahren des Standes der Technik hergestellten Röbelstäben, die pro Einzelleiterlage einen Isolationszuwachs von 0,25 bis 0,3 mm aufweisen, weist der erfindungsgemäße Röbelstab nur einen Isolationszuwachs von etwa 0,17 mm auf.

Daraus ergibt sich, daß der Füllfaktor wesentlich verbessert wird. Dies schlägt sich vor allem im Refurbishment der elektrischen Maschinen nieder, wonach mehr Kupfer in die Nuten einbringbar ist, was wiederum eine Leistungserhöhung der Maschine zufolge hat.

Auch die Verarbeitbarkeit des Einzelleiters zu einem Röbelstab wird durch das erfindungsgemäße Verfahren begünstigt. Bei den Verfahren gemäß dem Stand der Technik muß der quasi endlose Einzelleiter nach dem Aufbringen des Isolationslackes und vor dem Aufbringen der Glasseide zwischengelagert werden. Wie ja bekannt, wirkt sich bei Bandkupfer ein oftmaliges Umlenken auf die Steifigkeit negativ aus.

Nach einem besonderen Merkmal der Erfindung ist auch der mit dem erfindungsgemäßen Verfahren beschichtete Wicklungsteil, Teil der Erfindung.

Bestens bewährt hat sich auch der erfindungsgemäße Wicklungsteil zu seiner Weiterverarbeitung durch die überaus glatte Oberfläche.

Beispiel 1: Nach der thermischen Vorbehandlung wird das Leitermaterial zuerst mit einem Primerlack auf Basis aromatisches Amid beschichtet. Nach erfolgter Härtung wird eine Schicht aus einem modifizierten Polyesterimid aufgebracht und durchgehärtet. Danach erfolgt eine Schicht auf Basis Amid-Imid als Isolierlack. Auf diesem Aufbau wird der Haftvermittler auf Basis Polyvinylbutyral aufgebracht und durchgehärtet. Die aufgetragene Schichtdicke ist Primerlack 0.02 mm, Polyesterimid 0,07, Amid-Imid 0.03 mm und der Haftvermittler 0,03 mm. Die Gesamtschichtdicke ist 0,15 mm.

Beispiel 2: Nach der thermischen Vorbehandlung wird das Leitermaterial zuerst mit einem Pimerlack auf Basis Polyesterimid beschichtet. Nach erfolgter Härtung wird eine Schicht auf Basis Amid-Imid als Isolierlack aufgebracht und durchgehärtet. Auf diesen Aufbau wird der Haftvermittler auf Basis Polyvinylbutyral aufgebracht und durchgehärtet. Die aufgetragene Schichtdicke ist Polyesterimid 0,09 mm, Amid-Imid 0,03 mm und der Haftvermittler 0,03 mm. Die Gesamtschichtdicke beträgt 0,15 mm.

Beispiel 3: Nach der thermischen Vorbehandlung wird das Leitermaterial zuerst mit einem Primerlack auf Basis Polyesterimid beschichtet und ausgehärtet. Auf diesem Primerlack wird direkt der Haftvermittler auf Basis Polyvinylbutyral aufgebracht und ausgehärtet. Die aufgetragene Schichtdicke ist Polyesterimid 0,09 mm und der Haftvermittler 0,03 mm. Die Gesamtschichtdicke beträgt 0,12 mm.

Beispiel 4: Nach der thermischen Vorbehandlung wird das Leitermaterial zuerst mit einem Primerlack auf Basis aromatisches Amid beschichtet und ausgehärtet. Danach wird ein Isolierlack auf Basis Polyesterimid in einem Gemisch aus Kresol und Naphthalösungsmittel beschichtet und durchgehärtet. Darüber wird der Haftvermittler wie in Beispiel 1 bis 3 zitiert aufgebracht. Die aufgetragene Schichtdicke ist: Primerlack 0,02 mm, Polyesterimid 0,09 mm und der Haftvermittler 0,03 mm. Die Gesamtschichtdicke beträgt 0,14 mm.

Beispiel 5: Nach der thermischen Vorbehandlung wird das Leitermaterial zuerst mit einem Primerlack auf Basis aromatisches Amid gelöst in einem Gemisch aus N-Methylpyrrolidin und Xylol beschichtet und ausgehärtet. Danach wird ein Polyesterimidharz in einem Gemisch aus Kresol und Naphthalösungsmittel aufgebracht und ausgehärtet. Darauf wird eine Isolierschicht auf Basis Amid-Imid gelöst in einem Gemisch aus N-Methylpyrrolidin und Xylol aufgebracht und ausgehärtet. Auf diesem Aufbau wird der Haftvermittler auf Basis Polyvinylester gelöst in einem Gemisch aus Ethoxyethylacetat und Xylol aufgebracht und ausgehärtet. Die aufgetragene Schichtdicke ist: Primerlack 0,02 mm, Polyesterimidharz 0,07 mm, Amid-Imid 0,03 mm und der Haftvermittler mit 0,03 mm. Die Gesamtschichtdicke beträgt 0,15 mm.

Beispiel 6: Nach der thermischen Vorbehandlung wird das Leitermaterial zuerst mit einem Primerlack auf Basis Polyesterimid beschichtet und ausgehärtet. Danach wir ein Isolierlack auf Amid-Imid-Basis aufgetragen und ausgehärtet. Auf diesem Aufbau wird der Haftvermittler gemäß den vorgehenden Beispielen aufgebracht. Die aufgetragene Schichtdicke ist: Polyesterimid 0,09 mm, Amid-Imid 0,03 mm und der Haftvermittler von 0,03 mm. Die Gesamtschichtdicke beträgt 0,15 mm.

Beispiel 7: Nach der thermischen Vorbehandlung wird das Leitermaterial zuerst mit einem Primerlack auf Basis Polyvinylformal gelöst in einem Gemisch aus Kresol, Xylol und Naphthalösungsmittel aufgebracht und ausgehärtet. Auf diesem Primerlack wird direkt der in den vorgehenden Beispielen zitierte Haftvermittler aufgebracht und ausgehärtet. Die aufgetragene Schichtdicke ist: Polyvinylformal 0,11 mm und der Haftvermittler von 0,03 mm. Die Gesamtschichtdicke beträgt 0,14 mm.

## Patentansprüche

1. Verfahren zum Beschichten von Wicklungsteilen, insbesondere der Einzelleiter eines Röbelstabes vorzugsweise für rotierende, elektrische Maschinen, dadurch gekennzeichnet, daß nach der thermischen Vorbehandlung des Leitermaterials ein Primerlack aufgebracht und angehärtet vorzugsweise ausgehärtet wird, gegebenenfalls anschließend eine oder mehrere Schichten Isolierlack auf Basis Esterimid bzw. Amid-Imid oder vorzugsweise einem Gemisch aus beiden aufgebracht und die einzelnen Schichten angehärtet, vorzugsweise ausgehärtet werden und daß danach ein für die Weiterverarbeitung des Isolationsaufbaues geeigneter Haftvermittler auf Basis Polyvinylester, vorzugsweise ein Polyvinylbutyral aufgebracht und durchgehärtet wird.

2. Verfahren nach Anspruch 1, dadurch gekennzeichnet, daß der Primerlack ein aromatisches Polyamid mit einem Festkörpergehalt von vorzugsweise 18 % gelöst in geeigneten aromatischen Lösungsmittelgemischen ist.

3. Verfahren nach Anspruch 1, dadurch gekennzeichnet, daß der Primerlack auf Basis Polyvinylester, vorzugsweise mit einem Festkörpergehalt von 26 % Polyvinylformal gelöst in geeigneten aromatischen Lösungsmittelgemische ist.

4. Verfahren nach Anspruch 1, dadurch gekennzeichnet, daß der Primerlack ein aromatischer Ester, vorzugsweise ein modifiziertes Polyesterimid mit einem Festkörpergehalt von 28 % gelöst in geeigneten Lösungsmittelgemischen ist.

5. Beschichteter Wicklungsteil, insbesondere Röbelstab hergestellt nach einem der Ansprüche 1 bis 4.

## Claims

1. Method of coating parts of windings, particularly of single conductors of a Roebel bar, preferably for rotating electrical machines, characterised in that after a thermal pre-treatment of the conductor material, a primer lacquer is coated and cured, preferably fully cured, that optionally one or more layers of an insulating lacquer on the basis of ester imide or amide-imide or, preferably, a mixture of both are coated subsequently, the individual layers being cured, preferably fully cured, and that afterwards an adherence mediator on the basis of a polyvinyl ester, preferable a polyvinyl butyral, being appropriate for further processing the insulation structure is coated and fully cured.

2. Method according to claim 1, characterised in that the primer lacquer is an aromatic polyamide having a solid contents of preferably 18%, dissolved in appropriate aromatic solvent mixtures.

3. Method according to claim 1, characterised in that the primer lacquer is on the basis of a polyvinyl ester, preferably having a solid contents of 26% polyvinyl formal dissolved in appropriate aromatic solvent mixtures.

4. Method according to claim 1, characterised in that the primer lacquer is an aromatic polyester, preferably a modified polyester imide having a solid contents of preferably 28%, dissolved in appropriate aromatic solvent mixtures.

5. Coated winding part, particularly, Roebel bar, produced according to any of claims 1 to 4.

## Revendications

1. Procédé de parties d'enroulements, en particulier des conducteurs individuels d'une barre de Roebel, de préférence pour des machines électriques tournantes, caractérisé en ce que, après le prétraitement thermique du matériau du conducteur, un vernis de couche de fond est appliqué et durci superficiellement, de préférence durci structurellement, le cas échéant, ensuite, une ou plusieurs couches de vernis isolant, à base d'ester imide ou d'amide-imide, ou, de préférence, d'un mélange des deux, étant appliquées et les différentes couches étant durcies superficiellement, de préférence durcies structurellement, et en ce que, ensuite, un agent adhésif convenant pour la continuation du traitement de la structure d'isolation, à base de polyvinyl ester, de préférence un polyvinylbutyral, étant appliqué et durci dans la masse.

2. Procédé selon la revendication 1, caractérisé en ce que le vernis de couche de fond est un polyamide aromatique ayant une teneur en solide d'une valeur de préférence de 18 %, dissous dans des mélanges de solvants aromatiques appropriés.

3. Procédé selon la revendication 1, caractérisé en ce que le vernis de couche de fond est à base de polyvinyl ester, de préférence un polyvinylformal ayant une teneur en solide de 26 %, dissous dans des mélanges de solvants aromatiques appropriés.

4. Procédé selon la revendication 1, caractérisé en ce que le vernis de couche de fond est un ester aromatique, de préférence un polyester imide modifié ayant une teneur en solide de 28 %, dissous dans des mélanges de solvants appropriés.

5. Pièce d'enroulement revêtue, en particulier barre de Roebel, fabriquée selon l'une des revendications 1 à 4.
